Europäisches Patentamt

European Patent Office

Office européen des brevets

(11) Numéro de publication : **0 024 999**
**B1**

# FASCICULE DE BREVET EUROPÉEN

(45) Date de publication du fascicule du brevet :
22.06.83

(21) Numéro de dépôt : **80420096.2**

(22) Date de dépôt : **29.07.80**

(51) Int. Cl.³ : **B 23 Q   3/154**

(54) Bloc magnétique à aimants permanents et à dispositif mécanique de commande marche-arrêt.

(30) Priorité : 27.08.79 FR 7921962

(43) Date de publication de la demande :
11.03.81 Bulletin 81/10

(45) Mention de la délivrance du brevet :
22.06.83 Bulletin 83/25

(84) Etats contractants désignés :
AT BE CH DE FR GB IT LI LU NL SE

(56) Documents cités :
DE A 2 347 868
DE A 2 404 546
DE A 2 423 453
DE B 1 179 653
DE C 855 494
FR A 785 601
FR A 1 133 449
FR A 1 134 512
FR A 1 135 767
FR A 1 452 241
FR A 1 553 987
FR A 2 080 549

(73) Titulaire : **Braillon, Philibert Maurice**

**F-78300 Montmelian (FR)**

(72) Inventeur : **Braillon, Philibert Maurice**

**F-78300 Montmelian (FR)**

(74) Mandataire : **Maureau, Pierre**
**Cabinet GERMAIN & MAUREAU Le Britannia - Tour C**
**20, Boulevard E. Déruelle**
**F-69003 Lyon (FR)**

Jouve, 18, rue St-Denis, 75001 Paris, France

# Bloc magnétique à aimants permanents et à dispositif mécanique de commande marche-arrêt

La présente invention a pour objet un bloc magnétique à aimants permanents et à dispositif mécanique de commande marche-arrêt, du type comprenant, montés dans un corps évidé, au moins un premier ensemble magnétique constitué par deux empilements parallèles entre eux, de direction longitudinale, dans lesquels des aimants permanents alternent avec des pièces polaires, les polarités des aimants étant telles que les pièces polaires sont alternativement « Nord » et « Sud », et au moins un second ensemble magnétique, de même pas polaire que le premier ensemble magnétique, constitué par un empilement, parallèle aux précédents et disposé entre ceux-ci, dans lequel les aimants permanents alternent avec des pièces polaires, les polarités des aimants étant aussi telles que les pièces polaires sont alternativement « Nord » et « Sud », les deux ensembles magnétiques précités étant équivalents en flux et des moyens étant prévus pour déplacer l'un de ces ensembles magnétiques, en direction longitudinale et sur la longueur d'un pas polaire, par rapport à l'autre ensemble magnétique et au corps, entre une position « marche » dans laquelle les flux des deux ensembles magnétiques s'ajoutent et une position « arrêt » dans laquelle les mêmes flux se neutralisent. Ce bloc magnétique est notamment destiné à constituer un plateau magnétique, utilisé pour la fixation des pièces à usiner sur des machines-outils.

Une telle disposition est déjà connue par le brevet français N° 1 452 241 au nom du Déposant. Elle peut notamment comprendre, comme décrit dans ce document, deux empilements latéraux fixes d'aimants et de pièces polaires, constituant le « premier ensemble magnétique », et au moins un empilement central mobile et constituant le « second ensemble magnétique ». Le dispositif de commande, qui dans ce cas sert à déplacer l'empilement central, est monté à une extrémité du bloc et constitué par un mécanisme simple à excentrique. Ce mécanisme permet une commutation « marche-arrêt », entre les deux positions définies ci-après :

— Dans la position « marche », les pièces polaires « Nord » de l'empilement central mobile sont situées en regard des pièces polaires « Nord » des empilements latéraux fixes, et il en est de même pour toutes les pièces polaires « Sud ». Les lignes de force du champ magnétique se referment alors par l'extérieur, ce qui permet la fixation de pièces sur le bloc magnétique, les flux des deux ensembles s'additionnant.

— Dans la position « arrêt », les pièces polaires « Nord » de l'empilement central mobile sont situées en regard des pièces polaires « Sud » des empilements latéraux fixes ; inversement, les pièces polaires « Sud » de l'empilement central mobile sont situées en regard des pièces polaires « Nord » des empilements latéraux fixes. Les lignes de force du champ magnétique se referment alors par l'intérieur du bloc. Les deux ensembles magnétiques sont ainsi mis en « court-circuit » ; leurs flux se neutralisent, l'induction magnétique extérieure se trouve annulée, et les pièces placées sur le bloc ne sont pas attirées.

Les forces magnétiques étant, comme on le comprend aisément, symétriques par rapport à l'axe de l'empilement central mobile, l'effort de déplacement à exercer est faible, ce qui assure la facilité de manœuvre et la longévité du dispositif de commande mécanique. Par ailleurs, la disposition transversale des pièces polaires permet d'avoir un pas polaire relativement fin, autorisant la fixation de pièces à usiner assez petites.

Toutefois, dans la réalisation connue rappelée ci-dessus, le corps évidé du bloc magnétique, dans lequel sont logés les empilements d'aimants et de pièces polaires, est constitué par la combinaison d'une semelle inférieure, d'un cadre rectangulaire réalisant les quatre faces latérales, et d'une plaque polaire supérieure. La semelle et le cadre ne participent pas au fonctionnement magnétique. Seule la plaque polaire supérieure, divisée par des entrefers dont l'espacement correspond au pas polaire des empilements internes, est active et permet d'attirer des pièces. Ceci limite les possibilités d'utilisation du bloc magnétique considéré ; en particulier, il n'est pas possible de fixer des pièces latéralement, ce qui pourrait être avantageux pour certaines opérations d'usinage, et en raison de la présence de la semelle, le bloc magnétique ne peut se fixer que mécaniquement sur la table d'une machine-outil.

La présente invention vise à remédier à ces inconvénients en fournissant un bloc magnétique du type rappelé ci-dessus, qui soit actif non seulement par sa face supérieure mais aussi par ses faces latérales, pour pouvoir attirer des pièces contre ses flancs, et éventuellement aussi par sa face inférieure, pour pouvoir se fixer magnétiquement sur son support.

A cet effet, l'invention a essentiellement pour objet un bloc magnétique à aimants permanents et à dispositif mécanique de commande marche-arrêt, du type précédemment défini, dans lequel le corps évidé est formé d'une alternance de plaques polaires constituant des pièces uniques avec lesdites pièces polaires de l'ensemble magnétique fixe et d'entrefers situés dans des plans transversaus, avec un pas polaire égal à celui des empilements d'aimants et de pièces polaires, ces plaques polaires et ces entrefers apparaissant à la fois à la partie supérieure et sur les faces latérales du bloc magnétique, et possédant tous des ouvertures recevant les empilements d'aimants et de pièces polaires.

Ainsi l'invention modifie fondamentalement la structure classique du corps du bloc magnétique, tout en conservant un principe connu pour la disposition des aimants et le passage de la position « marche » à la position « arrêt », ce qui permet d'avoir un corps dont les plaques polaires sont actives sur toute leur périphérie, de sorte que le bloc magnétique, considéré dans son ensemble, possède plusieurs faces actives. Le bloc magnétique est en particulier rendu actif à la fois sur sa face supérieure et sur ses deux plus grandes faces latérales, donc sur au moins trois faces, ce qui permet de fixer des pièces au choix sur plusieurs faces et dans diverses orientations, pour des opérations d'usinage variées, sans nécessité de démontage et de changement de position du bloc magnétique.

Suivant un mode de réalisation particulier, la semelle traditionnelle est supprimée. Le bloc magnétique est ainsi rendu actif aussi sur sa face inférieure, et il peut être fixé magnétiquement sur la table d'une machine-outil, sans nécessité d'autres moyens de fixation.

Suivant un autre mode de réalisation avantageux, une semelle telle qu'en acier doux est conservée, mais celle-ci est en contact avec une sur deux des plaques polaires précitées du corps, ayant toutes la même polarité, tandis que les autres plaques polaires, de polarité inverse, sont maintenues à distance de ladite semelle, de manière à en être isolées magnétiquement. Grâce à cette disposition, on récupère des fuites magnétiques et on diminue la rémanence en position de « court-circuitage ». En particulier, l'absence de contact entre une plaque polaire sur deux et la semelle permet ici, en position de « marche », de concentrer le flux magnétique sur les trois faces actives du bloc magnétique.

Dans un mode de réalisation de l'invention, les aimants et les pièces polaires de l'empilement central mobile sont de forme annulaire et sont montés sur une tige commune ou sur un tube commun, et immobilisés axialement sur ladite tige ou ledit tube, et les aimants des empilements latéraux fixes ont sensiblement la forme de demi-anneaux et sont logés dans des évidements de plaques en matériau amagnétique, insérées entre des plaques polaires communes aux deux empilements latéraux. Dans ce cas, les aimants des empilements latéraux sont formés à partir d'aimants annulaires identiques à ceux de l'empilement central et coupés en deux suivant leur diamètre, ce qui garantit l'obtention de deux ensembles magnétiques rigoureusement identiques en flux.

Bien que le déplacement relatif des deux ensembles magnétiques soit en principe d'un pas polaire, pour le passage de la position « marche » à la position « arrêt », des moyens peuvent être prévus, suivant une autre caractéristique de l'invention, pour un déplacement relatif supplémentaire de l'un des ensembles magnétiques par rapport à l'autre, de manière à réaliser une inversion de polarité des plaques polaires du corps permettant la démagnétisation des pièces fixées sur le bloc.

De toute façon, l'invention sera bien comprise à l'aide de la description qui suit, en référence au dessin schématique annexé représentant, à titre d'exemples non limitatifs, deux formes d'exécution de ce bloc magnétique à aimants permanents et à dispositif mécanique de commande marche-arrêt :

Figure 1 est une vue d'ensemble, en perspective, d'un bloc magnétique conforme à l'invention, avec semelle ;

Figure 2 est une vue de dessus, avec coupes partielles, du bloc magnétique selon la figure 1, représenté en position « marche » ;

Figure 3 est une vue en coupe longitudinale de ce bloc magnétique, toujours en position « marche », suivant 3-3 de figure 2 ;

Figure 4 en est une vue en coupe transversale, suivant 4-4 de figure 3 ;

Figure 5 est une vue similaire à figure 2, montrant le même bloc magnétique en position « arrêt » ;

Figure 6 est une vue en coupe longitudinale d'un bloc magnétique conforme à l'invention, mais dépourvu de semelle.

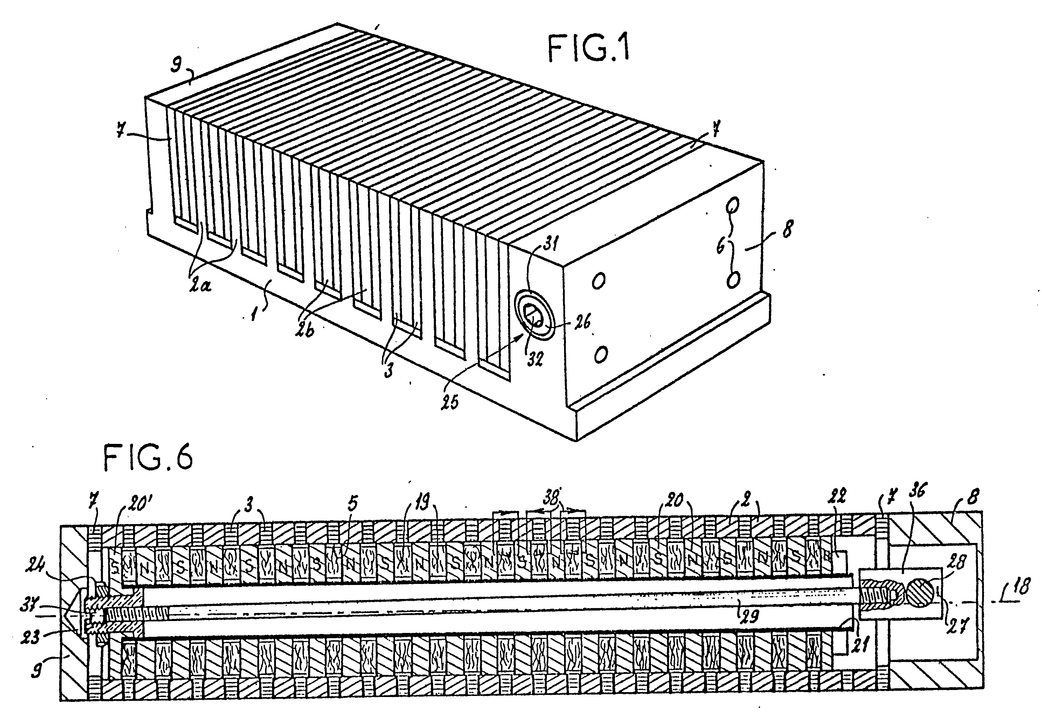

Le bloc magnétique représenté aux figures 1 à 5 comprend une semelle rectangulaire 1 et un corps parallélépipédique constitué par un empilement de plaques 2a et 2b en acier extra-doux, à haute perméabilité magnétique, qui alternent avec des plaques 3 en matériau amagnétique, tel que laiton, dural, acier inoxydable... Les plaques 3 possèdent deux ouvertures rectangulaires latérales 4, de même diamètre, et toutes les plaques 2a, 2b et 3 possèdent une ouverture circulaire centrale 5. Toutes ces plaques sont maintenues au moyen de tirants 6 entre des plaques d'extrémité amagnétiques 7 et des pièces terminales 8, 9 de formes différentes de celle des plaques courantes. Ainsi les deux plaques d'extrémité amagnétiques 7 ne possèdent pas d'ouvertures latérales, tandis que les deux pièces terminales 8 et 9 ne comportent aucune des ouvertures des plaques intermédiaires.

Le corps du bloc magnétique possède deux alignements d'évidements latéraux, parallèles entre eux, qui résultent de la succession des ouvertures latérales 4 des plaques 3. Ces évidements reçoivent l'ensemble magnétique fixe, constitué par des aimants permanents 12 à force coercitive élevée, notamment du type « Ferrite », en forme de demi-anneaux séparés les uns des autres par les parties, situées en regard de ces aimants, des plaques polaires 2a et 2b.

Les aimants permanents 12 sont aimantés suivant la direction longitudinale du bloc magnétique, et ils sont disposés avec des polarités alternées, de sorte que dans chaque empilement on a alternativement une pièce polaire 2a qui est « Nord », une pièce polaire 2b qui est « Sud », une pièce polaire 2a qui est « Nord », etc..., ces polarités étant symbolisées sur les figures par les lettres N et S.

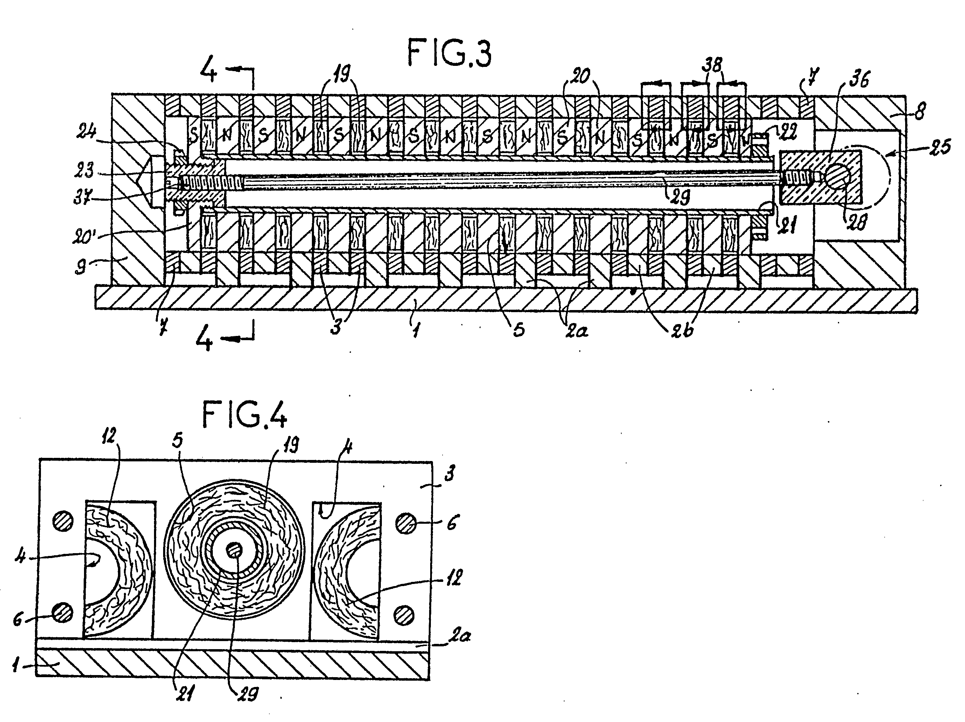

Une plaque polaire sur deux, à savoir chacune des plaques désignées par 2a, est en contact avec la semelle 1 en acier doux. Les autres plaques polaires, désignées par 2b, sont maintenues à distance de la semelle 1, soit par un intervalle rempli d'air, soit par un matériau intercalaire amagnétique (voir figures 1 et 3). Ainsi toutes les plaques 2a, correspondant ici à une polarité « Nord », sont court-circuitées par la semelle 1, alors que toutes les plaques 2b de polarité inverse, « Sud » dans l'exemple considéré, restent isolées magnétiquement de la semelle 1.

Un ensemble magnétique mobile est monté dans l'évidement cylindrique central, d'axe 18, qui résulte de la succession des ouvertures circulaires centrales 5 des plaques 2a, 2b et 3. Cet ensemble est constitué par un troisième empilement dans lequel alternent des aimants permanents 19 à force coercitive élevée, notamment du type « Ferrite », et des pièces polaires 20 en matériau à grande perméabilité magnétique, plus particulièrement en acier extra-doux.

Dans cet empilement central, les aimants permanents 19 et les pièces polaires 20 ont une forme annulaire et sont montés sur un tube commun 21. A une extrémité, le tube 21 est fileté extérieurement et porte une bague vissée 22, qui vient en appui contre la première pièce polaire 20. A son autre extrémité, le tube 21 est fileté intérieurement et reçoit une tête vissée 23, autour de laquelle est montée la dernière pièce polaire 20', de forme quelque peu différente des autres. La tête 23 comporte un filetage extérieur sur lequel est vissé un écrou 24 appliqué contre la dernière pièce polaire 20', et ainsi l'ensemble des aimants 19 et pièces polaires 20 se trouve immobilisé axialement sur le tube 21.

Les aimants 19 sont aimantés parallèlement à l'axe 18 de l'empilement considéré, et ils sont disposés sur le tube 21 avec des polarités alternées, de sorte que l'on a alternativement une pièce polaire 20 qui est « Nord », une pièce polaire 20 qui est « Sud », une pièce polaire 20 qui est « Nord », etc..., ces polarités étant symbolisées sur les figures par les lettres N et S. Le pas polaire de cet empilement central, c'est-à-dire la distance égale à la somme de l'épaisseur d'un aimant 19 et de l'épaisseur d'une pièce polaire 20, est égal au pas polaire des deux empilements formant l'ensemble magnétique fixe. En outre, l'empilement central mobile est équivalent en flux à l'ensemble magnétique fixe constitué par les deux empilements latéraux. Cette dernière propriété découle simplement du fait que les aimants 12 des empilements latéraux, en forme de demi-anneaux, résultent de la division en deux d'aimants annulaires identiques à ceux 19 de l'empilement central.

L'empilement central est mobile, le long de son axe 18, et peut être déplacé d'une longueur égale à un pas polaire à l'aide d'un dispositif de commande 25 logé dans la pièce terminale 8. Dans l'exemple représenté, le dispositif de commande 25 est réalisé suivant le principe bielle-manivelle. Il comprend essentiellement un arbre 26 monté tournant dans un logement cylindrique transversal d'axe 27 de la pièce terminale 8, cet arbre 26 comportant à une extrémité un ergot 28 excentré par rapport à l'axe 27, et une tige 29 qui relie l'ergot 28 à la tête 23, en traversant de part en part le tube 21.

L'arbre 26 est monté tournant dans son logement avec interposition de deux bagues 30 et 31. Ce logement débouche sur l'une des faces latérales de la pièce 8, de sorte que l'extrémité de l'arbre 26 opposée à l'ergot 28 est accessible de l'extérieur. Une conformation creuse à six pans 32 (voir figure 1) est prévue à cette extrémité de l'arbre 26, près de laquelle est encore ménagée une gorge annulaire recevant un joint 33.

Dans sa partie centrale, située entre les deux bagues 30 et 31, l'arbre 26 présente une entaille 34, dans laquelle est introduit un doigt fixe 35, de direction radiale, solidaire de la pièce 8. L'association de l'entaille 34 et du doigt 35 constitue un système de butée autorisant une rotation de l'ordre de 180° de l'arbre 26.

La tige de liaison 29 est filetée à ses deux extrémités. Une extrémité est vissée dans une pièce 36 montée pivotante sur l'ergot 28, tandis que l'autre extrémité de la tige 29 est vissée dans un taraudage axial 37 de la tête 23 du tube 21.

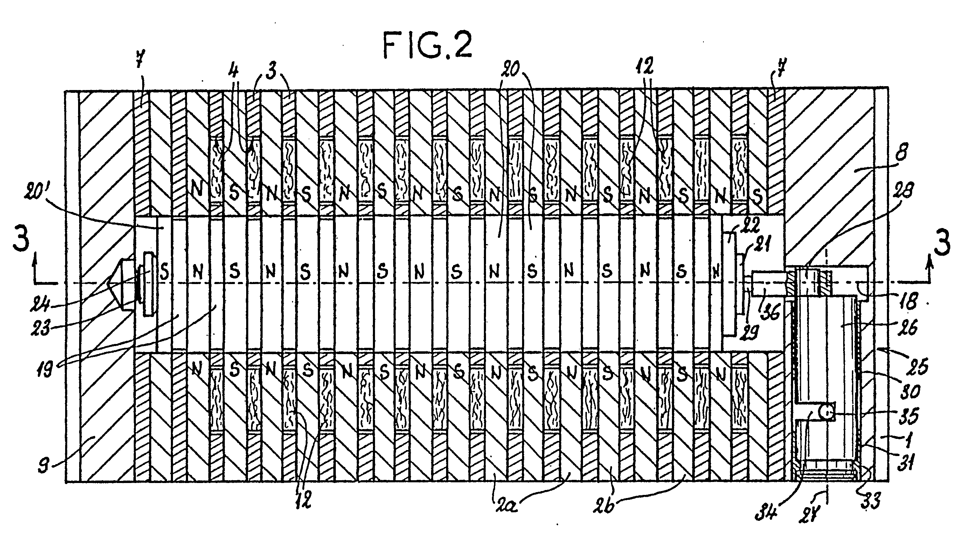

Dans la position « marche », illustrée par les figures 2 et 3, l'empilement central occupe une position telle que ses pièces polaires 20 « Nord » sont situées en regard des pièces polaires 2a « Nord » des deux empilements latéraux fixes, les pièces polaires 20 « Sud » se situant alors en regard des pièces polaires 2b « Sud ». Compte tenu de cette position relative des pièces polaires, les lignes de force 38 du champ magnétique peuvent se refermer seulement par l'extérieur en passant à travers les plaques 2a, 2b à haute perméabilité magnétique du corps, ce qui permet la fixation de pièces sur le bloc magnétique. Il est à noter que l'induction magnétique extérieure ainsi créée résulte, dans son ensemble, de l'addition des flux engendrés par les deux empilements latéraux fixes et du flux engendré par l'empilement central mobile, ces trois empilements fonctionnant « en parallèle » du point de vue du circuit magnétique.

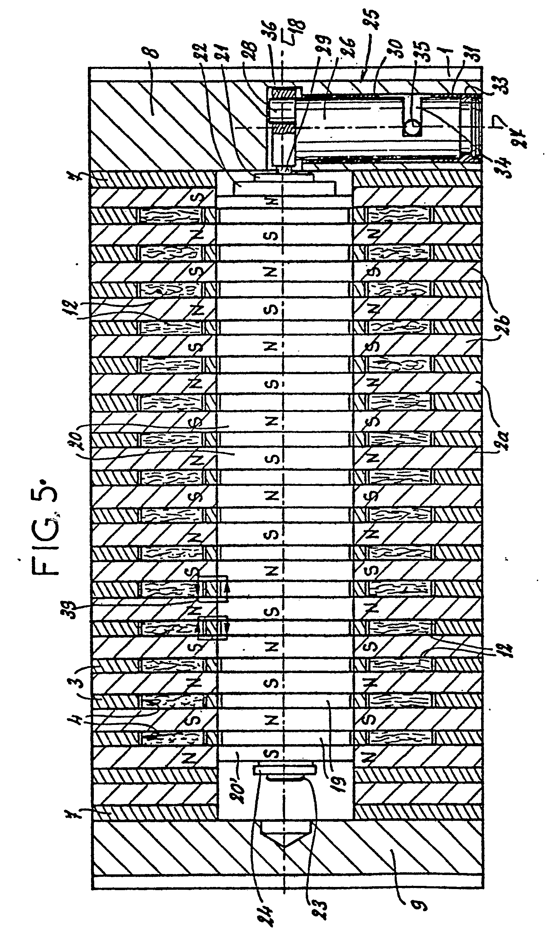

Pour passer de la position « marche » à la position « arrêt », on manœuvre l'arbre 26 à l'aide d'une clé à six pans appropriée, introduite en 32, de manière à lui faire décrire une rotation de 180°, au cours de laquelle l'ergot excentré 28 vient dans une position diamétralement opposée à sa position initiale. L'excentration de l'ergot 28 est choisie de telle sorte que son déplacement mesuré suivant l'axe 18 soit égal à un pas polaire. Ainsi, comme le montre la figure 5, l'empilement central mobile est déplacé lui-même d'un pas polaire, par l'intermédiaire de la tige 29 ; il occupe alors une position telle que ses pièces polaires 20 « Nord » sont situées en regard des pièces polaires 2b « Sud » des deux empilements latéraux fixes, les pièces polaires 20 « Sud » se situant elles en regard des pièces polaires 2a « Nord ». Compte tenu de cette position relative des pièces polaires, les lignes de force 39 du champ magnétique peuvent se refermer par l'intérieur du bloc, les flux équivalents engendrés par l'ensemble magnétique fixe d'une part et par l'ensemble magnétique mobile d'autre part se neutralisant par « soustraction » ; l'induction magnétique extérieure se trouve ainsi annulée et les pièces placées sur le bloc ne sont plus retenues.

En plus de la commande « marche-arrêt » qui vient d'être décrite, il est possible de provoquer une inversion des polarités qui permet la démagnétisation des pièces fixées sur le bloc magnétique. A cet effet, il suffit de prévoir que le dispositif de commande puisse déplacer l'empilement central mobile d'un pas polaire supplémentaire ; en continuant ainsi le déplacement de l'ensemble magnétique mobile, on aimante les pièces polaires 2 du corps en sens inverse, d'où le phénomène de démagnétisation. Le même résultat peut être obtenu en prévoyant que l'ensemble magnétique jusqu'ici considéré comme « fixe » est déplaçable de manière à créer une inversion de polarité des pièces polaires 2.

La figure 6 montre une autre forme de réalisation du bloc magnétique objet de l'invention, dépourvue de semelle. Toutes les plaques polaires 2 du corps sont identiques et elles affleurent un même plan, qui constitue la face inférieure du bloc magnétique. La symétrie de cette réalisation permet à la face inférieure d'être active, de la même manière que la face supérieure. Ainsi la fixation du bloc sur une table de machine-outil est assurée magnétiquement. La disposition des aimants, ainsi que le dispositif de commande marche-arrêt ne sont pas modifiés, par rapport à la description détaillée donnée plus haut pour un mode de réalisation, et les éléments correspondants sont désignés par les mêmes repères.

Comme il va de soi, l'invention ne se limite pas aux seules formes d'exécution de ce bloc magnétique à aimants permanents et à dispositif mécanique de commande marche-arrêt qui ont été décrites ci-dessus, à titre d'exemples ; elle en embrasse, au contraire, toutes les variantes de réalisation et d'application qui relèvent du même principe, et en particulier les modifications et adaptations suivantes entrant dans le cadre de l'invention :

— La forme annulaire ou semi-annulaire des aimants et/ou des pièces polaires des empilements magnétiques n'est pas limitative, et peut être remplacée par une forme carrée, rectangulaire... notamment pour les empilements fixes.

— Dans le dispositif de commande à excentrique décrit, la clé amovible peut être remplacée par un levier ou autre organe de manœuvre, et l'ensemble de ce dispositif peut aussi être remplacé par un dispositif équivalent, par exemple un dispositif à vis et écrou, ou encore un petit vérin pneumatique ou hydraulique.

— Le principe de l'invention reposant sur un mouvement relatif d'ensembles magnétiques, la disposition générale peut être inversée en ce sens que l'empilement central devient l'ensemble magnétique fixe, tandis que les deux empilements latéraux forment l'ensemble magnétique mobile.

— Enfin, suivant la largeur ou la surface active désirée, les ensembles magnétiques avec la disposition précédemment décrite peuvent être multipliés, en étant par exemple montés bout à bout ou côte à côte.

## Revendications

1. Bloc magnétique à aimants permanents et à dispositif mécanique de commande marche-arrêt, du type comprenant, montés dans un corps évidé (1, 2, 3) au moins un premier ensemble magnétique constitué par deux empilements parallèles entre eux, de direction longitudinale, dans lesquels des aimants permanents (12) alternent avec des pièces polaires (2), les polarités des aimants (12) étant telles que les pièces polaires (2) sont alternativement « Nord » et « Sud », et au moins un second ensemble magnétique, de même pas polaire que le premier ensemble magnétique, constitué par un empilement, parallèle aux précédents et disposé entre ceux-ci, dans lequel les aimants permanents (19) alternent avec des pièces polaires (20), les polarités des aimants (19) étant aussi telles que les pièces polaires (20) sont alternativement « Nord » et « Sud », les deux ensembles magnétiques précités étant équivalents en flux et des moyens (25 à 37) étant prévus pour déplacer l'un de ces ensembles magnétiques, en direction longitudinale et sur la longueur d'un pas polaire, par rapport à l'autre ensemble magnétique et au corps, entre une position « marche » dans laquelle les flux des deux ensembles magnétiques s'ajoutent et une position « arrêt » dans laquelle les mêmes flux se neutralisent, caractérisé en ce que son corps évidé est formé d'une alternance de plaques polaires (2) constituant des pièces uniques avec lesdites pièces polaires (2) de l'ensemble magnétique fixe (2, 12) et d'entrefers (3) situés dans des plans transversaux, avec un pas polaire égal à celui des empilements d'aimants (12, 19) et de pièces polaires (20), ces plaques polaires (2) et ces entrefers (3) apparaissant à la fois à la partie supérieure et sur les faces latérales du bloc magnétique, et possédant tous des ouvertures (4, 5) recevant les empilements d'aimants (12, 19) et de pièces polaires (20).

2. Bloc magnétique selon la revendication 1, caractérisé en ce qu'il est dépourvu de semelle (1), de sorte que les plaques polaires (2) du corps apparaissent aussi sur la face inférieure, rendue active, du bloc magnétique.

3. Bloc magnétique selon la revendication 1, conservant une semelle (1), caractérisé en ce que celle-ci est en contact avec une sur deux des plaques polaires (2a) précitées du corps, ayant toutes la même polarité, tandis que les autres plaques polaires (2b), de polarité inverse, sont maintenues à distance de ladite semelle (1), de manière à en être isolées magnétiquement.

4. Bloc magnétique selon l'une quelconque des revendications 1 à 3, caractérisé en ce que les aimants (19) et les pièces polaires (20) de l'empilement central mobile sont de forme annulaire et sont montés sur une tige commune ou sur un tube commun (21), et immobilisés axialement sur ladite tige ou ledit tube (21), et en ce que les aimants (12) des empilements latéraux fixes ont sensiblement la forme de demi-anneaux et sont logés dans des évidements (4) de plaques (3) en matériau amagnétique, insérées entre des plaques polaires (2) communes aux deux empilements latéraux.

5. Bloc magnétique selon la revendication 4, caractérisé en ce que les aimants (12) des empilements latéraux sont formés à partir d'aimants annulaires identiques à ceux (19) de l'empilement central et coupés en deux suivant leur diamètre.

6. Bloc magnétique selon l'une quelconque des revendications 1 à 5, caractérisé en ce que des moyens sont prévus pour un déplacement relatif supplémentaire de l'un des ensembles magnétiques (19, 20) par un rapport à l'autre (2, 12), de manière à réaliser une inversion de polarité des plaques polaires (2) du corps permettant la démagnétisation des pièces fixées sur le bloc.

## Claims

1. Magnetic block with permanent magnets and a mechanical on/off control mechanism, of the type comprising, mounted within a hollow body (1, 2, 3), at least one first magnetic assembly constituted by two parallel stacks arranged in the longitudinal direction, in which the permanent magnets (12) alternate with pole-pieces (2), the polarities of the magnets (12) being such that the pole-pieces (2) are alternately « North » and « South », and at least one second magnetic assembly, of the same polar pitch as the first magnetic assembly, comprising a stack, parallel to the previously-mentioned stacks and arranged between them, in which the permanent magnets (19) alternate with pole-pieces (20), the polarities of the magnets (19) also being such that the pole-pieces (20) are alternately « North » and « South », the two previously-mentioned magnetic assemblies being equivalent in flux, and means (25 to 37) being provided to displace one of these magnetic assemblies in a longitudinal direction and over the length of one polar step, relative to the other magnetic assembly and to the body, between a « on » position in which the fluxes of the two magnetic assemblies are added together and a « off » position in which these fluxes neutralize one another, characterised in that the hollow body is formed by alternate polar plates (2) which form single units with the said pole-pieces (2) of the fixed magnetic assembly (2, 12) and air gaps (3) located in transverse planes, having a polar pitch equal to that of the stack of magnets (12, 19), and pole-pieces (20), these polar plates (2) and these air gaps (3) appearing simultaneously on the upper part and on the lateral surfaces of the magnetic block, and having openings (4, 5) which receive the stack of magnets (12, 19) and pole-pieces (20).

2. Magnetic block according to claim 1, characterised in that it has no base plate (1), so that the polar plates (2) of the body also appear on the lower surface, which is activated, of the magnetic block.

3. Magnetic block according to claim 1, which retains a base-plate (1), characterised in that this latter is in contact with one half of the said polar plates (2a) of the body which half all have the same polarity, while the other plates (2b), which are of opposite polarity, are maintained spaced from the said plate (1), so as to be magnetically insulated from it.

4. Magnetic block according to any of claims 1 to 3, characterised in that the magnets (19) and the pole-pieces (20) of the central displacable stack are annular and are mounted on a common rod or tube (21), and held fixed axially on the said rod or tube (21) and in that the magnets (12) of the lateral fixed stacks are substantially of semi-annular form and are held in recesses (4) in the plates (3) of non-magnetic material, inserted between polar plates (2) which are common to the two lateral stacks.

5. Magnetic block according to claim 4, characterised in that the magnets (12) of the lateral stacks are formed from annular magnets which are identical to those magnets (19) of the central stack and which have been cut diametrically in half.

6. Magnetic block according to any of claims 1 to 5, characterised in that means are provided for an additional relative displacement of one of the magnetic assemblies (19, 20) relative to the other (2, 12), so as to cause an inversion of polarity of the polar plates (2) of the body to permit demagnetisation of articles fixed to the block.

## Ansprüche

1. Dauermagnetisches Spanngerät mit mechanischer Steuervorrichtung zum Ein- und Ausschalten, des Typs beinhaltend, montiert in einem Hohlkörper (1, 2, 3) mindestens eine erste magnetische Baugruppe bestehend aus zwei untereinander parallelen, längs gerichteten Stapeln, in denen Dauermagnete (12) mit Polstücken (2) abwechseln, wobei die Polaritäten der Dauermagneten (12) so sind, daß die Polstücke (2) alternativ « Nord » und « Süd » sind, und mindestens einer zweiten magnetischen Baugruppe der gleichen polaren Teilung wie die erste magnetische Baugruppe, gebildet aus einem zu den ersten Stapeln parallelen und zwischen ihnen angeordneten Stapel, in dem die Dauermagnete (19) mit Polstücken (20) abwechseln, wobei die Polaritäten der Dauermagnete (19) auch so sind, daß die Polstücke (20) alternativ « Nord » und « Süd » sind und wobei ferner die beiden genannten magnetischen Baugruppen im Magnetfluß equivalent sind und Mittel (25-37) vorgesehen sind, um eine dieser magnetischen Baugruppen, in Längsrichtung und für die Länge einer Polteilung bezüglich der anderen magnetischen Baugruppe und bezüglich des Hohlkörpers zu verlagern, und zwar zwischen einer Einschaltstellung, in der die Magnetflüsse der beiden magnetischen Baugruppen sich zusammenfügen und einer Ausschaltstellung, in der die gleichen Magnetflüsse sich neutralisieren, dadurch gekennzeichnet, daß sein hohler Körper aus einer abwechselnden Aufeinanderfolge von Polplatten (2), die einstückig mit den genannten Polstücken (2) der feststehenden magnetischen Baugruppe (2, 12) sind und aus Eisenspalten (3) gebildet sind, die in Transversalebenen liegen, mit einer polaren Teilung gleich derjenigen der Stapel der Dauermagnete (12, 19) und der Polstücke (20), wobei diese Polplatten (2) und diese Eisenspalte (3) sowohl auf dem oberen Bereich wie auf den Seitenflächen des magnetischen Spanngerätes erscheinen und alle Öffnungen (4, 5) aufweisen, die die Stapel der Dauermagnete (12, 19) und der Polstücke (20) ausnehmen.

2. Dauermagnetisches Spanngerät nach Anspruch 2, dadurch gekennzeichnet, daß es ohne Fußplatte (1) belassen ist, derart, daß die Polplatten (2) des Körpers auch auf der wirksam gemachten Unterseite des dauermagnetischen Spanngerätes erscheinen.

3. Dauermagnetisches Spanngerät nach Anspruch 1, mit einer Fußplatte (1), dadurch gekennzeichnet, daß diese jeweils mit einer von zwei polaren Platten (2a) des genannten Körpers in Kontakt steht, die alle die gleiche Polarität haben, während die anderen Polplatten (2b) umgekehrter Polarität auf Abstand von der Fußplatte (1) gehalten sind, derart, daß sie ihr gegenüber magnetisch isoliert sind.

4. Dauermagnetisches Spanngerät nach einem der Ansprüche 1-3, dadurch gekennzeichnet, daß die Dauermagnete (19) und die Polstücke (20) des zentralen, mobilen Stapels ringförmig sind und auf einer gemeinsamen Stange oder einem gemeinsamen Rohr (21) angeordnet und axial auf dieser Stange oder diesem Rohr (21) festgesetzt sind und daß die Dauermagnete (12) der seitlichen ortsfesten Stapel die Form von Halbringen haben und in Ausnehmungen (4) von Platten (3) aus unmagnetischem Material angeordnet sind, die zwischen den beiden seitlichen Stapeln gemeinsamen Polplatten (2) eingesetzt sind.

5. Dauermagnetisches Spanngerät nach Anspruch 4, dadurch gekennzeichnet, daß die Dauermagnete (12) der seitlichen Stapel aus ringförmigen Dauermagneten identisch denjenigen (12) des zentralen Stapels gebildet sind und entsprechend ihrem Durchmesser in zwei Teile geschnitten sind.

6. Dauermagnetisches Spanngerät nach einem der Ansprüche 1-5, dadurch gekennzeichnet, daß Mittel für eine zusätzliche Relativverlagerung einer der magnetischen Baugruppen (19, 20) zur anderen (2, 12) vorgesehen sind, derart, daß eine Umkehrung der Polarität der Polplatten (2) des Körpers realisiert wird, was eine Ent magnetisierung der auf dem Spanngerät befestigten Teile erlaubt.

FIG.1

FIG.6

# FIG.2

# FIG.3

# FIG.4

FIG. 5.

0 024 999